# EUROPÄISCHE PATENTSCHRIFT

(11) **EP 1 437 563 B1**
(45) Veröffentlichungstag und Bekanntmachung des Hinweises auf die Patenterteilung: **16.04.2008**
(21) Anmeldenummer: 03028814.6
(22) Anmeldetag: 15.12.2003
(51) Int. Cl.: F25B 43/00, B60H 1/32

(54) **Akkumulator für eine Klimaanlage, insbesondere Fahrzeugklimaanlage**
Accumulator for an air conditioner, particularly for vehicle air conditioner
Accumulateur pour un appareil de climatisation, en particulier pour un appareil de climatisation de véhicule

(30) Priorität: 13.01.2003 DE 10300801
(43) Veröffentlichungstag der Anmeldung: 14.07.2004
(73) Patentinhaber: HANSA METALLWERKE AG, 70567 Stuttgart (DE)
(72) Erfinder: Waldenburg, Albrecht, 70597 Stuttgart (DE)
(74) Vertreter: Ostertag, Ulrich

(56) Entgegenhaltungen:
- US-A- 4 651 540
- US-A- 5 233 842
- US-A1- 2002 095 948
- PATENT ABSTRACTS OF JAPAN Bd. 1995, Nr. 08, 29. September 1995 (1995-09-29) & JP 07 127951 A (MITSUBISHI ELECTRIC CORP), 19. Mai 1995 (1995-05-19)

## Beschreibung

Die Erfindung betrifft einen Akkumulator für eine Klimaanlage, insbesondere Fahrzeugklimaanlage, mit
a) einem Gehäuse, das einen Einlaß und einen Auslaß für ein Kältemittel aufweist;
b) einem Rohreinsatz, der sich an seinem oberen Ende in den Innenraum des Gehäuses öffnet, mit einem absteigenden Rohrabschnitt in den unteren Bereich des Innenraumes des Gehäuses führt, dort eine Durchgangsbohrung zum Ansaugen von Öl aufweist und mit einem aufsteigenden Rohrabschnitt zu dem Auslaß des Gehäuses führt,
c) einer Leiteinrichtung, welche
   ca) dem Einlaß des Gehäuses benachbart in dessen Innenraum angeordnet ist und das zuströmende Kältemittel so umlenkt, daß es eine Wirbel-(Kreis-) Strömungskomponente entlang der Innenmantelfläche des Gehäuses erhält;
   cb) eine ebene Führungsfläche aufweist, die über einen bestimmten Winkel um den Rohreinsatz herum geführt ist.

Bei einer nach dem Orifice-Prinzip arbeitenden Klimaanlage enthält das in den Akkumulator eintretende Kältemittel im allgemeinen neben der gasförmigen eine flüssige Phase.

Die Aufgabe des Akkumulators ist es insbesondere, die gasförmige von der flüssigen Phase vollständig zu trennen, dagegen Öl, welches von dem Kältemittel mitgeführt wird, in das System zurückzubringen. Darüber hinaus dient der Akkumulator der Trocknung und Speicherung des Kältemittels.

Um eine möglichst gute Trennung der flüssigen von der gasförmigen Phase zu erzielen, gibt es Akkumulatoren, wie sie etwa in der DE 199 10 775 C1, der EP 1 132 696 A1 oder der US 2002/0095948 A1 beschrieben sind. Diese bekannten Akkumulatoren weisen Leiteinrichtungen auf, mit denen das in den Innenraum des Gehäuses einströmende Kältemittel in eine Wirbelströmung versetzt wird. Unter dem Einfluß der Zentrifugalkraft wird die flüssige Phase des Kältemittels gegen die Innenfläche des Gehäuses gedrückt und strömt dort nach unten ab.

Beim Gegenstand der DE 199 10 775 C1 umfasst die Leiteinrichtung drei unterschiedliche Flächenabschnitte: eine obere Leitfläche, die im wesentlichen vertikal verläuft und in der Draufsicht kreisbogenförmig gekrümmt ist, eine zweite Leitfläche, die gegen die Achse des Akkumulators schräg gestellt ist und schließlich eine schmale dritte Leifläche, die senkrecht zur Strömungsrichtung des eintretenden Kältemittels verläuft. Diese Leiteinrichung ist verhältnismäßig kompliziert aufgebaut und führt zu scharfen Umlenkungen der Strömungsrichtung des Kältemittels.

Beim Gegenstand der EP 1 132 696 A1 umfasst die Leiteinrichtung einen axial verlaufenden Einlaßrohr-Abschnitt, der so zu einer Seite hin geöffnet ist, daß das Kältemittel die gewünschte azimutale Geschwindigkeitskomponente erhält. Dieser Einlaßrohr-Abschnitt muß verhältnismäßig tief nach unten in den Innenraum des Gehäuses hineinreichen, damit das Kältemittel nicht im direkten Kurzschluß vom Einlaß des Gehäuses zur Einlaßöffnung des Rohrabschnittes strömen und eine weitgehende Trennung von flüssiger und gasförmiger Phase tatsächlich stattfinden kann.

Beim Gegenstand der US 2002/0095948 A1 umfasst die Leiteinrichtung ein als Spitzkegel ausgebildetes Bauteil, in dessen Außenfläche ausgehend von seiner Spitze nach unten gewundene V-Nuten, Kanäle oder Rippen vorgesehen sind. Durch letztere wird der auf das Spitzkegel-Bauteil treffende Kältemittelstrom jedoch auseinandergerissen, was zu Verwirbelungen führt.

Bei einem Akkumulator der eingangs genannten Art, wie er in der US 4 651 540 A beschrieben ist, umfasst die Leiteinrichtung eine ebene Führungsfläche, die in einer zur Längsachse des Gehäuses senkrechten Ebene um einen Rohrabschnitt des Rohreinsatzes herum verläuft. Die Leiteinrichtung umfasst außerdem eine gekrümmte Rampenfläche, über welche der Kältemittelstrom scharf auf die Führungsfläche umgelenkt wird. Daher kommt es dort zu Verwirbelungen im Kältemittelstrom.

Aufgabe der vorliegenden Erfindung ist es, einen Akkumulator der eingangs genannten Art so auszugestalten, daß die Leiteinrichtung ohne abrupte Änderungen der Strömungsrichtung einfach gestaltet sein kann, dabei aber gleichzeitig dem Kältemittel vor dem Eintritt in den Rohreinsatz einen ausreichenden Strömungsweg bietet, auf dem eine weitgehende Trennung der flüssigen von der gasförmigen Phase erreicht werden kann.

Diese Aufgabe wird erfindungsgemäß dadurch gelöst, daß
d) die ebene Führungsfläche schräg zur Achse des Gehäuses angestellt ist, so daß die Führungsfläche wendelförmig um den Rohreinsatz herum geführt ist.

Die erfindungsgemäß als Leiteinrichtung eingesetzte Führungsfläche erfüllt eine mehrfache Funktion: Zum einen gibt sie der an ihr entlang geführten Strömung des Kältemittels die gewünschte Wirbelcharakteristik, welche die Trennung der flüssigen von der gasförmigen Phase fördert. Zum anderen bewegt sie das Kältemittel mit einer verhältnismäßig sanften Richtungsumlenkung vom Einlaß des Gehäuses weg und stellt für das Kältemittel vor dem Eintritt in den Rohreinsatz einen ausreichend großen Strömungsweg zur Verfügung, auf dem die Trennung von flüssiger und gasförmiger Phase stattfinden kann. Eine "Kurzschlußströmung" zwischen dem Einlaß in das Gehäuse und dem Einlaß in den Rohreinsatz wird auf diese Weise vermieden.

Die geschilderte Wirkung der Führungsfläche wird noch verstärkt, wenn sie mit mehreren parallelen Führungsrippen versehen ist.

Bei einer bevorzugten Ausführungsform der Erfindung ist die Führungsfläche an einem Schikaneneinsatz ausgebildet, der in einem neben der Führungsfläche liegenden Bereich eine mit Sieböffnungen versehende Wand aufweist, wobei die Führungsfläche an ihrem unteren Ende in den Raum unterhalb der die Sieböffnungen aufweisenden Wand mündet. Die die Sieböffnungen aufweisende Wand muß von dem Kältemittel daher auf dem Weg in den Rohreinsatz von unten nach oben durchtreten werden. Die Sieböffnungen halten einerseits Verunreinigungen zurück und dienen zum Zweiten dazu, eventuell noch vorhandene flüssige Tröpfchen im strömenden Kältemittel zu zerteilen und so zur Verdampfung zu bringen.

Zweckmäßig ist ferner, wenn der Rohransatz an seinem oberen Ende über einen Einlaßbereich des Schikaneneinsatzes mit dem Innenraum des Gehäuses und über einen Auslaß-Rohrabschnitt mit dem Auslaß des Gehäuses kommuniziert. Die Strömungswege vom Einlaß des Gehäuses zum Rohreinsatz und vom Rohreinsatz zum Auslaß des Gehäuses führen also über den Schikaneneinsatz. Dies hat montagetechnische Vorteile, da dann die Einsätze einfach hintereinander in das Gehäuse des Akkumulators eingefügt werden können.

Der Einlaßbereich des Schikaneneinsatzes sollte in diesem Falle in den oberhalb der die Sieböffnungen tragenden Wand liegenden Bereich des Innenraumes des Gehäuses münden.

Ein Ausführungsbeispiel der Erfindung wird nachfolgend anhand der Zeichnung näher erläutert; es zeigen
- Figur 1: einen Axialschnitt durch einen Akkumulator;
- Figur 2: einen Schnitt durch den Akkumulator von Figur 1 gemäß der dortigen Linie II-II;
- Figur 3: die perspektivische Ansicht eines Schikaneneinsatzes, wie er in dem Akkumulator der Figuren 1 und 2 verwendet wird;
- Figur 4: die Draufsicht auf den Schikaneneinsatz der Figur 3;
- Figur 5: perspektivisch die beiden Hälften eines Rohreinsatzes, wie er in dem Akkumulator der Figuren 1 und 2 verwendet wird;
- Figur 6: perspektivisch das Oberteil eines Trockenmitteleinssatzes des Akkumulators der Figuren 1 und ;
- Figur 7: das zum Oberteil von Figur 6 gehörende Unterteil des Trockenmitteleinsatzes.

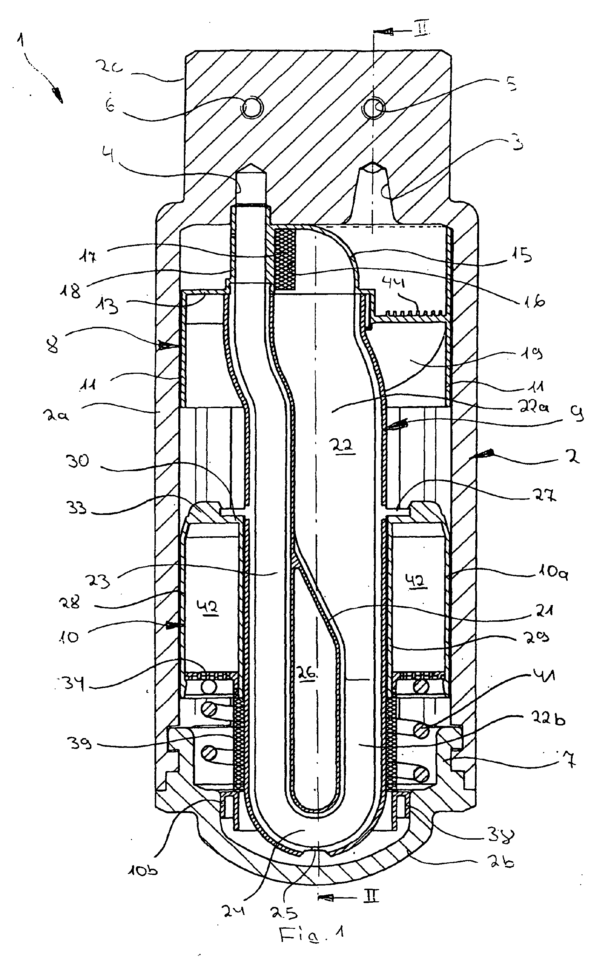

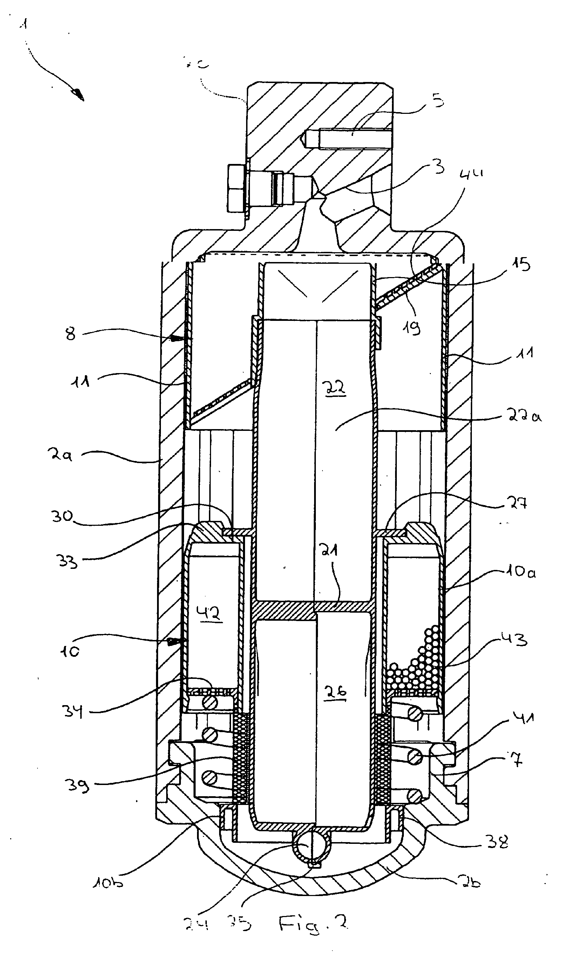

Zunächst wird auf die Figuren 1 und 2 Bezug genommen. Der hier dargestellte und insgesamt mit dem Bezugszeichen 1 gekennzeichnete Akkumulator umfaßt ein Gehäuse 2, das aus einem nach unten offenen Gehäuseoberteil 2a und einem an diesem befestigten Gehäuseunterteil 2b zusammengesetzt ist. Das Gehäuseoberteil 2a besitzt über den größten Teil seiner axialen Erstreckung eine im Querschnitt kreisförmige Außenkontur, weist jedoch an seiner oberen Stirnwand einen im Querschnitt rechteckigen, massiven Vorsprung 2c auf, in welchem eine gewinkelt zu einer Seitenfläche des Vorsprunges 2c verlaufende Einlaßöffnung 3 und eine in ähnlicher Weise gewinkelt verlaufende Auslaßöffnung 4 für das Kältemittel vorgesehen sind. An den Mündungsstellen der Einlaßöffnung 3 bzw. der Auslaßöffnung 4 in die Seitenflächen des Vorsprunges 2c können die Anschlußleitungen des Akkumulators 1 befestigt werden, wozu in dem Vorsprung 2c zwei Gewindebohrungen 5, 6 eingebracht sind.

Das Gehäuseunterteil 2b ist nach unten kuppelartig ausgebaucht und mit einer Art Bajonettverschluß 7 am offenen unteren Ende des Gehäuseoberteils 2a befestigt. Zusätzlich können die Gehäuseteile 2a und 2b miteinander verschweißt sein.

Im Inneren des Gehäuses 2 befinden sich von oben nach unten ein Schikaneneinsatz 8, ein Rohreinsatz 9 und ein Trockenmitteleinsatz 10, die in noch zu beschreibender Weise ineinandergesteckt sind.

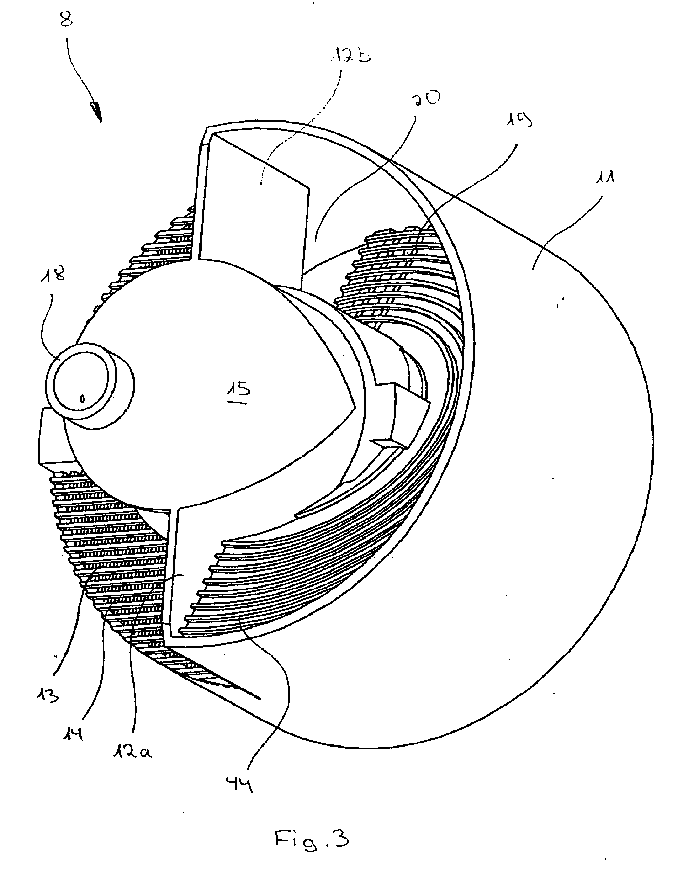

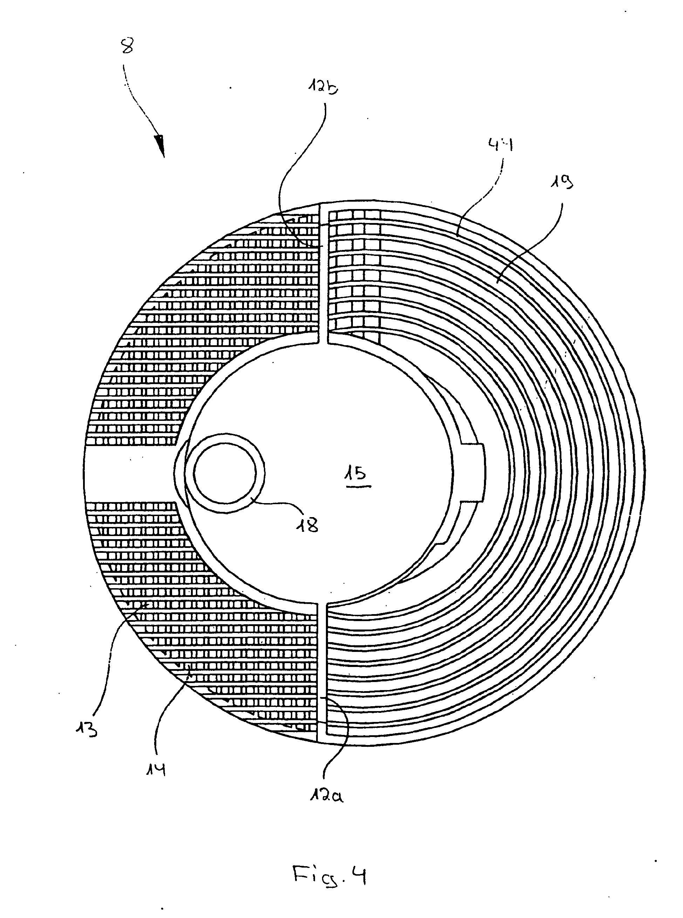

Zur Beschreibung des Schikaneneinsatzes 8 wird nunmehr auf die Figuren 3 und 4 Bezug genommen, welche diesen Schikaneneinsatz 8 perspektivisch bzw. in Draufsicht zeigen. Er umfaßt eine zylindrische Umfangswand 11, deren Außendurchmesser so bemessen ist, daß sie im-eingebauten Zustand an der Innenmantelfläche des Gehäuseoberteiles 2a anliegt. Die Umfangswand 11 verläuft im unteren Bereich des Schikaneneinsatzes 8 über den gesamten Umfang, also über 360°, während sie im axial oberen Bereich an zwei vertikalen Wandabschnitten 12a, 12b endet, die außeraxial verlaufen und in der Draufsicht der Figur 4 zwei ungleich große Kreissegmente von einander trennen. Dies ist gleichbedeutend mit der Aussage, daß die Wandabschnitte 12a und 12b zwar fluchten, jedoch nicht in einer Axialebene des Schikaneneinsatzes 8 liegen.

In dem in den Figuren 3 und 4 links von den Wandabschnitten 12a, 12b liegenden Bereich, in dem die Umfangswandung 11 eine geringere axiale Höhe aufweist, ist der obere Rand der Umfangswand 11 durch eine horizontale Wand 13 in Form eines Kreisringsegmentes mit den Wandabschnitten 12a, 12b verbunden. Die horizontale Wand 13 des Schikaneneinsatzes 8 ist mit einer Vielzahl von Sieböffnungen 14 versehen, die bei der Herstellung des Schikaneneinsatzes 8 mit eingespritzt oder in einem Siebgewebe ausgebildet sein können, das entweder die horizontale Wand 13 selbst bildet oder auf verhältnismäßig große Fenster in dieser horizontalen Wand 13 aufgelegt ist.

Im radial mittleren Bereich ist an den Schikaneneinsatz 8 zwischen den Wandabschnitten 12a, 12b ein sich nach unten (vgl. Figur 1) öffnender kuppelartiger Einlaßbereich 15 angespritzt, der sich auf der der horizontalen Wand 13 benachbarten Seite der Wandabschnitte 12a, 12b oberhalb der horizontalen Wand 13 über ein großflächiges, durch ein Sieb 17 abgedecktes Fenster 16 in den Innenraum des Gehäuses 2 öffnet. Die Anordnung ist also so, daß der oberhalb der horizontalen Wand 13 des Schikaneneinsatzes 8 liegende Innenraumbereich des Gehäuses 2 von dem in der Nähe der Einlaßöffnung 3 liegenden Innenraumbereich des Gehäuses 2 durch den Einlaßbereich 15 sowie die von diesem seitlich nach außen ragenden Wandabschnitte 12a, 12b des Schikaneneinsatzes 8 getrennt sind. Der oberhalb der horizontalen Wand 13 liegende Innenraumbereich des Gehäuses 2 steht jedoch über das Fenster 16 mit dem Innenraum des Einlaßbereiches 15 des Schikaneneinsatzes 8 in Verbindung.

Der Einlaßbereich 15 des Schikaneneinsatzes 8 wird von einem einstückig angeformten, achsparallelen Auslaßrohrabschnitt 18 durchzogen, der oben etwas über die Kuppelfläche des Einlaßbereiches 15 hinausragt und in montiertem Zustand in eine Stufe der Auslaßbohrung 4 eingeschoben ist, wie dies der Figur 1 zu entnehmen ist.

In dem in den Figuren 3 und 4 rechts von den Wandabschnitten 12a, 12b und rechts von dem Einlaßbereich 15 gelegenen und von dem die größere axiale Höhe aufweisenden Teil der Umfangswand 11 begrenzten Raum ist eine wendelförmige, schräg zur Achse des Gehäuses 2 angestellte Führungswand 19 vorgesehen. Die Führungswand 19 geht von dem Wandabschnitt 12a in einer axialen Höhe aus, die nahezu der maximalen Höhe der Umfangswand 11 entspricht, und senkt sich bis zu einer Stelle, die unterhalb des Wandabschnittes 12b liegt, auf eine axiale Höhe, die in der Nähe des unteren Randes der Umfangswand 11 liegt. Auf diese Weise entsteht zwischen dem unteren Rand des Wandabschnittes 12b, der in der Höhe der horizontalen Wand 13 liegt, und dem unteren Ende der Führungswand 19 ein Fenster 20, welches den Raum, in dem die Führungswand 19 verläuft, mit dem unterhalb der horizontalen Wand 13 befindlichen Innenraum des Schikaneneinsatzes 8 verbindet.

Die Führungsfläche 19 trägt an ihrer Oberseite eine Vielzahl paralleler Führungsrippen 44.

Die genauere Funktion des Schikaneneinsatzes 8 wird weiter unten erläutert.

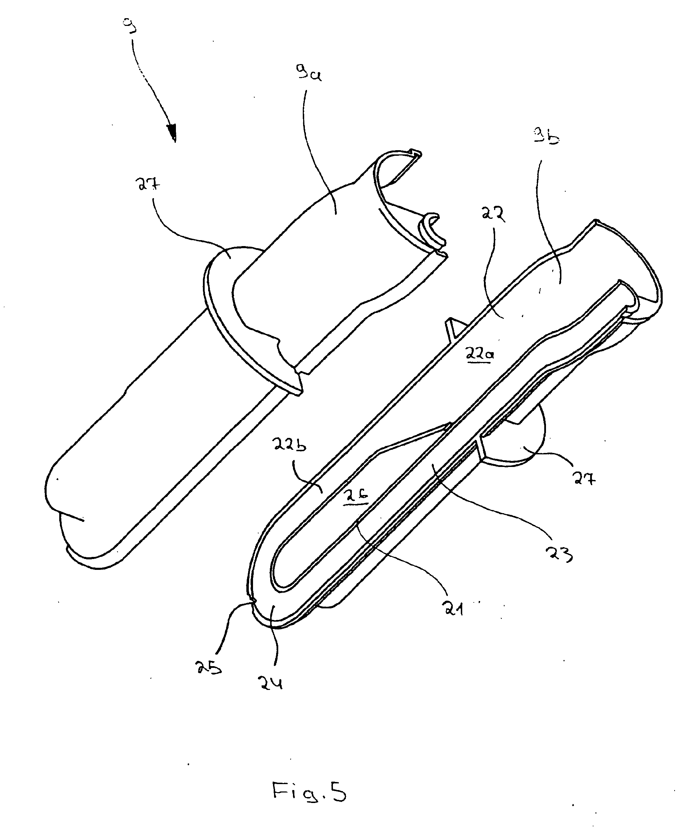

Zur Beschreibung des Rohreinsatzes 9 wird nunmehr auf die Figuren 1, 2 und 5 Bezug genommen. Dieser Rohreinsatz 9 ist aus herstellungstechnischen Gründen aus zwei Teilschalen 9a, 9b gespritzt, könnte aber grundsätzlich auch einstückig sein. Zusammengebaut besitzt der Rohreinsatz 9 eine in etwa zylindrische Außenkontur mit einem abgerundeten Boden. Durch eine innere Trennwand 21 ist der Innenraum des Rohreinsatzes 9 in einen Einlaßbereich 22 und einen Auslaßbereich 23 unterteilt. Der Einlaßbereich 22 und der Auslaßbereich 23 sind am unteren Ende des Rohreinsatzes 9 durch einen gekrümmten Übergangsbereich 24 miteinander verbunden, an dessen tiefster Stelle eine Durchgangsbohrung 25 vorgesehen ist. Durch eine entsprechende Formung der Trennwand 21 ist der Querschnitt des Einlaßbereiches 22 im oberen Bereich 22a deutlich größer als im unteren Bereich 22b, wo der Querschnitt im wesentlichen mit dem Querschnitt des Übergangsbereiches 24 und des Auslaßbereiches 23 übereinstimmt. Um dies zu erreichen, umschließt die Trennwand 21 einen nicht von Kältemittel durchströmten Hohlraum 26.

Auf seiner Außenmantelfläche trägt der Rohreinsatz 9 einen radialen, in der Außenkontur kreisförmigen Flansch 27, dessen Funktion weiter unten deutlich wird.

Der obere Endbereich des Rohreinsatzes 9 ist, wie den Figuren 1 und 2 zu entnehmen ist, so in den Schikaneneinsatz 8, insbesondere dessen Einlaßbereich 15, von unten her eingeführt und geformt, daß der obere Einlaßbereich 22a des Rohreinsatzes 9 mit dem Innenraum des Einlaßbereiches 15 des Schikaneneinsatzes 8 und der Auslaßbereich 23 des Rohreinssatzes 8 mit dem Auslaßrohrabschnitt 18 des Schikaneneinsatzes 8 kommuniziert.

In montiertem Zustand, der in den Figuren 1 und 2 dargestellt ist, erstreckt sich der Rohreinsatz 8 bis in die Nähe des tiefsten Punktes des Gehäuseunterteiles 2b.

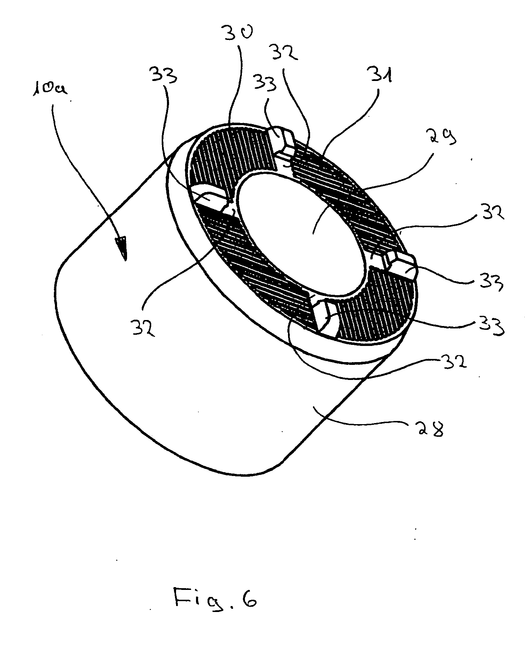

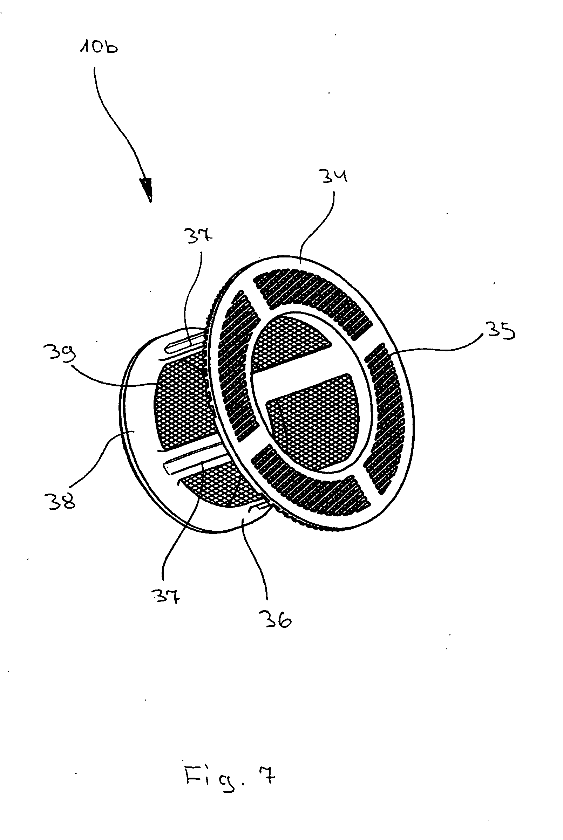

Im unteren Bereich des Gehäuses 2 ist, den Rohreinsatz 9 umgebend, der ringförmige Trockenmitteleinsatz 10 angeordnet. Zu dessen Beschreibung wird neben den Figuren 1 und 2 nachfolgend auf die Figuren 6 und 7 Bezug genommen. Der Trockenmitteleinsatz 10 umfaßt ein ringförmiges Oberteil 10a, das in Figur 6 perspektivisch dargestellt ist. Dieses Oberteil 10a weist eine äußere Zylinderwand 28, deren Außendurchmesser mit dem Innendurchmesser des Gehäuseoberteils 2a übereinstimmt, und eine innere Zylinderwand 29, die bereichsweise an der Außenfläche des Rohreinsatzes 9 anliegt, auf. An ihren oberen Rändern sind die äußere Zylinderwand 28 und die innere Zylinderwand 29 durch eine ringförmige horizontale Stirnfläche 30 miteinander verbunden, die eine Vielzahl von schlitzförmigen Durchtrittsöffnungen 31 besitzt. Die schlitzförmigen Durchtrittsöffnungen 31 sind auf vier Bereiche aufgeteilt, die durch radial verlaufende, keine Schlitze aufweisende Stege 32 voneinander getrennt sind. Die Stege 32 tragen in ihrem radial außenliegenden Bereich Rastnasen 33, die so dimensioniert und geformt sind, daß unter ihnen der Flansch 27 des Rohreinsatzes 9 eingerastet werden kann, wie dies in den Figuren 1 und 2 gezeigt ist.

Das untere Ende des Oberteiles 10a des Kältemitteleinsatzes 10 wird durch das in Figur 7 dargestellte Unterteil 10b verschlossen. Dieses weist einen ringförmigen Boden 34 auf, in dem eine Vielzahl von Sieböffnungen 35 vorgesehen sind. Diese Sieböffnungen 35 werden beim Spritzen des Unterteiles 10b mit eingeformt.

Von dem Boden 34 erstreckt sich einstückig ein Siebträger 36 nach unten, der vier achsparallele Streben 37 und ein diese an ihren unteren Enden verbindendes Ringteil 38 besitzt. Die vier Fenster, die nach unten durch das Ringteil 38, nach oben durch den Boden 34 und seitlich durch die Streben 37 begrenzt sind, sind mit einem Siebgewebe 39 abgedeckt. Der Boden 34 des Unterteiles 10b des Trockenmitteleinsatzes 10 kann von unten her in das Oberteil 10a eingeführt und dort hinter Rastnasen 40 am inneren, unteren Endbereich der äußeren Zylinderwand 28 verrastet werden. In der montierten Stellung des Akkumulators 1 liegt der äußere Rand des Ringteiles 38 an einem zylindrischen Innenwandbereich des Gehäuseunterteiles 2a an, wodurch eine Zentrierung stattfindet.

Wie die Figuren 1 und 2 zeigen, durchsetzt der Rohreinsatz 9 in montiertem Zustand den gesamten Trockenmitteleinsatz 10 einschließlich des Siebträgers 16 von oben nach unten, so daß also die tiefste Stelle des Rohreinsatzes 9, nämlich die Durchgangsbohrung 25, in geringem Abstand von dem Gehäuseunterteiles 2b liegt.

Zwischen einer Stufe an der Innenwand des Gehäuseunterteiles 2b und der Unterseite des Bodens 34 des Trockenmitteleinsatzes 10 ist eine Druckfeder 41 verspannt, welche den Trockenmitteleinsatz 10 nach oben gegen den Flansch 27 des Rohreinsatzes 9 und hierdurch den Rohreinsatz 9 nach oben gegen den Schikaneneinsatz 8 und letztendlich den Schikaneneinsatz 8 nach oben bis zum Anschlag an die Innenwand des Gehäuseoberteiles 2a drückt. Auf diese Weise bleiben alle Einsätze 8, 9, 10 in ständigem Kraftschluß, so daß Klappergeräusche vermieden werden können.

Der ringförmige Innenraum 42 des Trockenmitteleinsatzes 10 ist mit einer Trockenmittelschüttung 43 gefüllt, die nur in Figur 2 teilweise angedeutet ist.

Die Funktion des oben beschriebenen Akkumulators 1 ist wie folgt:
Kältemittel, welches sowohl eine gasförmige als auch eine flüssige Phase aufweist, gelangt über die Einlaßöffnung 3 in denjenigen oberen Bereich des Innenraumes des Gehäuses 2, der oberhalb der Führungsfläche 19 liegt. Dieses Kältemittel bewegt sich nunmehr entlang der Führungsfläche 19 nach unten, wodurch es einen "Drall" erfährt, also sich in einer Art Wirbel- oder Kreisströmung bewegt. Die mit diesem "Drall" verbundene Zentrifugalkraft hilft, die flüssige von der gasförmigen Phase des Kältemittels zu trennen. Das Kältemittel tritt nunmehr durch das Fenster 20 in denjenigen Bereich des Innenraumes des Gehäuses 2 ein, der unterhalb der horizontalen Wand 13 des Schikaneneinsatzes 8 liegt.

Die flüssige Phase des Kältemittels sinkt in dem Ringraum zwischen dem Rohreinsatz 9 und der Innenwand des Gehäuseoberteiles 2a nach unten und durchsetzt den Ringraum 42 des Trockenmitteleinsatzes 10, wobei das Kältemittel in bekannter Weise von Feuchtigkeit befreit wird. Es bildet im unteren Bereich des Innenraumes des Gehäuses 2 einen "Sumpf", wo es ständig absiedet. Eventuell in der flüssigen Phase des Kältemittels enthaltenes Maschinenöl tritt durch die Siebe 39 im Siebträger 36 des Unterteiles 10b des Trockenmitteleinsatzes 10 hindurch und sammelt sich in einem Sumpf in dem nach unten ausgebauchten Bereich des Gehäuseunterteiles 2b.

Gasförmiges Kältemittel, welches sich unterhalb der horizontalen Wand 13 des Schikaneneinsatzes 8 befindet, steigt nach oben und durchsetzt dabei die Sieböffnungen 14. Es fließt weiter durch das Sieb 17 im Fenster 16 des Einlaßbereiches 15 des Schikaneneinsatzes 8 und von dort in den oberen Einlaßbereich 22a des Rohreinsatzes 9b. Da der Querschnitt des oberen Einlaßbereiches 22a noch verhältnismäßig groß ist, ist die Strömungsgeschwindigkeit des gasförmigen Kältemittels in diesem Bereich 22a vergleichsweise niedrig. Dies reduziert die Gefahr, daß das gasförmige Kältemittel beim Eintritt in den Einlaßbereich 15 des Schikaneneinsatzes 8 flüssiges Kältemittel mitreißt. Wenn jedoch das gasförmige Kältemittel auf dem weiteren Weg durch den Einlaßbereich 22 des Rohreinsatzes 9 nach unten durch die beschriebene Verjüngung des Strömungsquerschnittes beschleunigt wird, erreicht es im unteren Einlaßbereich 22b und insbesondere im Übergangsbereich 24 in der Nähe der Durchgangsbohrung 25 diejenige hohe Geschwindigkeit, die erforderlich ist, um durch die Durchgangsbohrung 25 hindurch das Maschinenöl aus dem über dem Gehäuseunterteil 2b stehenden Sumpf ansaugen und mitnehmen zu können. Das so mit Öl beladene gasförmige Kältemittel fließt nunmehr durch den Auslaßbereich 23 des Rohreinsatzes 9 nach oben in den Auslaßrohrabschnitt 18 des Schikaneneinsatzes 8 und von dort zur Auslaßöffnung 4.

## Patentansprüche

1. Akkumulator für eine Klimaanlage, insbesondere Fahrzeugklimaanlage, mit
a) einem Gehäuse (2), das einen Einlaß (3) und einen Auslaß (4) für ein Kältemittel aufweist;
b) einem Rohreinsatz (9), der sich an seinem oberen Ende in den Innenraum des Gehäuses (2) öffnet, mit einem absteigenden Rohrabschnitt (22) in den unteren Bereich des Innenraumes des Gehäuses (2) führt, dort eine Durchgangsbohrung (25) zum Ansaugen von Öl aufweist und mit einem aufsteigenden Rohrabschnitt (23) zu dem Auslaß (4) des Gehäuses (2) führt,
c) einer Leiteinrichtung, welche
ca) dem Einlaß (3) des Gehäuses (2) benachbart in dessen Innenraum angeordnet ist und das zuströmende Kältemittel so umlenkt, daß es eine Wirbel-(Kreis-)Strömungskomponente entlang der Innenmantelfläche des Gehäuses (2) erhält;
cb) eine ebene Führungsfläche (19) aufweist, die über einen bestimmten Winkel um den Rohreinsatz (9) herum geführt ist,
**dadurch gekennzeichnet, daß**
d) die ebene Führungsfläche (19) schräg zur Achse des Gehäuses (2) angestellt ist, so daß die Führungsfläche (19) wendelförmig um den Rohreinsatz (9) herum geführt ist.

2. Akkumulator nach Anspruch 1, **dadurch gekennzeichnet, daß** die Führungsfläche (19) mit mehreren parallelen Führungsrippen (44) versehen ist.

3. Akkumulator nach Anspruch 1 oder 2, **dadurch gekennzeichnet, daß** die Führungsfläche (19) an einem Schikaneneinsatz (8) ausgebildet ist, der in einem neben der Führungsfläche (19) liegenden Bereich eine mit Sieböffnungen (14) versehene Wand (13) aufweist, wobei die Führungsfläche (19) an ihrem unteren Ende in den Raum unterhalb der die Sieböffnungen (14) aufweisenden Wand (13) mündet.

4. Akkumulator nach Anspruch 3, **dadurch gekennzeichnet, daß** der Rohreinsatz (9) an seinem oberen Ende über einen Einlaßbereich (15) des Schikaneneinsatzes (8) mit dem Innenraum des Gehäuses (2) und über einen Auslaß-Rohrabschnitt (18) des Schikaneneinsatzes (8) mit dem Auslaß (4) des Gehäuses (2) kommuniziert.

5. Akkumulator nach Anspruch 4, **dadurch gekennzeichnet, daß** der Einlaßbereich (15) des Schikaneneinsatzes (8) in den oberhalb der die Sieböffnungen (14) tragenden Wand (13) liegenden Bereich des Innenraumes des Gehäuses (2) mündet.

## Claims

1. Accumulator for an air conditioner, in particular a vehicle air conditioner, having
a) a housing (2), which has an inlet (3) and an outlet (4) for a refrigerant;
b) a pipe insert (9), which opens at its upper end into the interior of the housing (2), leads by way of a descending pipe section (22) into the lower region of the interior of the housing (2), there has a through-bore (25) for sucking in oil, and leads by way of an ascending pipe section (23) to the outlet (4) of the housing (2),
c) a directing device, which
ca) is arranged, adjacently to the inlet (3) of the housing (2), in the interior of the latter and deflects the inflowing refrigerant so as to impart to it a swirling (circular) flow component along the inner lateral surface of the housing (2);
cb) has a plane guide surface (19), which runs over a certain angle around the pipe insert (9),
**characterised in that**
d) the plane guide surface (19) is set obliquely to the axis of the housing (2), so that the guide surface (19) runs helically around the pipe insert (9).

2. Accumulator according to Claim 1, **characterised in that** the guide surface (19) is provided with a plurality of parallel guide ribs (44).

3. Accumulator according to Claim 1 or 2, **characterised in that** the guide surface (19) is formed on a baffle insert (8), which, in a region lying beside the guide surface (19), has a wall (13) provided with screen openings (14), the guide surface (19) opening, at its lower end, into the space below the wall (13) having the screen openings (14).

4. Accumulator according to Claim 3, **characterised in that** the pipe insert (9) communicates at its upper end with the interior of the housing (2) via an inlet region (15) of the baffle insert (8), and with the outlet (4) of the housing (2) via an outlet pipe section (18) of the baffle insert (8).

5. Accumulator according to Claim 4, **characterised in that** the inlet region (15) of the baffle insert (8) opens into that region of the interior of the housing (2) which lies above the wall (13) bearing the screen openings (14).

## Revendications

1. Accumulateur pour une installation de climatisation, en particulier installation de climatisation de véhicule, comprenant
a) un boîtier (2), qui présente une entrée (3) et une sortie (4) pour un réfrigérant ;
b) un insert tubulaire (9) qui s'ouvre au niveau de son extrémité supérieure dans l'espace intérieur du boîtier (2), conduit avec une section de tube descendante (22) dans la zone inférieure de l'espace intérieur du boîtier (2), y présente un perçage traversant (25) destiné à l'aspiration d'huile et conduit avec une section de tube ascendante (23) à la sortie (4) du boîtier (2),
c) un dispositif de guidage, lequel
ca) est agencé au voisinage de l'entrée (3) du boîtier (2) dans son espace intérieur et dévie le réfrigérant affluant de sorte qu'il reçoit une composante d'écoulement (circulaire) tourbillonnaire le long de la surface d'enveloppe intérieure du boîtier (2) ;
cb) présente une surface de guidage plane (19), qui est guidée autour de l'insert tubulaire (9) sur un angle donné,
**caractérisé en ce que**
d) la surface de guidage plane (19) est oblique par rapport à l'axe du boîtier (2), de sorte que la surface de guidage (19) est guidée autour de l'insert tubulaire (9) de manière hélicoïdale.

2. Accumulateur selon la revendication 1, **caractérisé en ce que** la surface de guidage (19) est dotée de plusieurs nervures de guidage (44) parallèles.

3. Accumulateur selon la revendication 1 ou 2, **caractérisé en ce que** la surface de guidage (19) est réalisée au niveau d'un insert de chicane (8), qui présente dans une zone située à côté de la surface de guidage (19) une paroi (13) pourvue d'ouvertures de tamis (14), la surface de guidage (19) débouchant au niveau de son extrémité inférieure dans l'espace sous la paroi (13) présentant les ouvertures de tamis (14).

4. Accumulateur selon la revendication 3, **caractérisé en ce que** l'insert tubulaire (9) communique au niveau de son extrémité supérieure avec l'espace intérieur du boîtier (2) par le biais d'une zone d'entrée (15) de l'insert de chicane (8) et avec la sortie (4) du boîtier (2) par le biais d'une section de tube de sortie (18) de l'insert de chicane (8).

5. Accumulateur selon la revendication 4, **caractérisé en ce que** la zone d'entrée (15) de l'insert de chicane (8) débouche dans la zone de l'espace intérieur du boîtier (2) située au-dessus de la paroi (13) portant les ouvertures de tamis (14).
